(19) Europäisches Patentamt
European Patent Office
Office européen des brevets

(11) **EP 4 008 456 A1**

(12) **EUROPEAN PATENT APPLICATION**

(43) Date of publication:
**08.06.2022 Bulletin 2022/23**

(21) Application number: 20306507.3

(22) Date of filing: **07.12.2020**

(51) International Patent Classification (IPC):
**B22F 10/28** (2021.01)    **B22F 10/36** (2021.01)
**B23K 15/00** (2006.01)    **B23K 26/342** (2014.01)
**B29C 64/153** (2017.01)    **B29C 64/393** (2017.01)
**B33Y 10/00** (2015.01)    **B33Y 50/02** (2015.01)

(52) Cooperative Patent Classification (CPC):
**B22F 10/28; B22F 10/36; B29C 64/153;
B29C 64/393; B33Y 10/00; B33Y 50/02;**
B22F 12/40; B33Y 30/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Renishaw PLC**
**Wotton-under-Edge, Gloucestershire GL12 8JR
(GB)**

(72) Inventor: **The designation of the inventor has not
yet been filed**

(74) Representative: **Germain Maureau
12, rue Boileau
69006 Lyon (FR)**

(54) **POWDER BED FUSION METHODS AND RELATED APPARATUS**

(57)    A method of determining instructions to be executed by a powder bed fusion apparatus, in which an object is built in a layer-by-layer manner by selectively irradiating regions of successively formed powder layers with an energy beam. The method comprises determining an exposure parameter for each location within a layer to be irradiated with the energy beam from a primary exposure parameter, the exposure parameters varying with location. An amount each exposure parameter varies from the primary exposure parameter is determined, at least in part, from a geometric quantity of the object derived from the location of the irradiation.

Fig. 3

**Description**

**Field of Invention**

This invention concerns powder bed fusion methods in which an object is built in a layer-by-layer manner by selectively irradiating areas of successively formed powder layers with an energy beam and apparatus for carrying out the methods, such as powder fusion apparatus, build preparation systems, such as build preparation software, and instructions stored on a data carrier for controlling powder bed fusion apparatus.

**Background**

Powder bed fusion apparatus produce objects through layer-by-layer solidification of a material, such as a metal powder material, using a high-energy beam, such as a laser beam. A powder layer is formed in a build plane across a powder bed contained in a build sleeve by lowering a build platform in the build sleeve to lower the powder bed, dosing a heap of powder adjacent to the lowered powder bed and spreading the heap of powder with a recoater across (from one side to another side of) the powder bed to form the layer. Portions of the powder layer corresponding to a cross-section of the workpiece to be formed are then solidified through irradiating these areas with the beam. The beam melts or sinters the powder to form a solidified layer. After selective solidification of a layer, the powder bed is lowered by a thickness of the newly solidified layer and a further layer of powder is spread over the surface and solidified, as required.

A surface finish of the object can vary with angle of the downwardly facing surface. In particular, lower build angles can exhibit more prominent effects due to droop of material and excessive heat being input into the area. In an attempt to reduce these effects, it is known to identify (overhanging) regions of an area of a layer to be solidified, which are solidified using different, overhang exposure parameters to those (bulk exposure parameters) used for other (core/bulk) regions of the area. The overhang regions are typically associated with downwardly oriented surfaces of the object that are below a threshold angle, such as below 45 degrees, to the build plane.

However, it has been found that, even with the use of overhang parameters within the overhang regions, deformations and/or failure of the part can still occur at these overhang regions. Furthermore, the use of a threshold angle introduces a change in the surface finish where the geometry transitions from below the threshold to above, which can be considered to be a defect.

**Summary of Invention**

According to a first aspect of the invention there is provided a method of determining powder bed fusion instructions to be executed by a powder bed fusion apparatus, in which an object is built in a layer-by-layer manner by selectively irradiating regions of successively formed powder layers with an energy beam, the method comprises determining an exposure parameter for each location within a layer to be irradiated with the energy beam, the exposure parameters varying with location.

The exposure parameter for each location within a layer to be irradiated with the energy beam may be determined from a primary exposure parameter. An amount each exposure parameter varies from the primary exposure parameter may be determined, at least in part, from a geometric quantity of the object derived from the location of the irradiation.

In this way, a smaller set of primary exposure parameters can be provided and the method of the invention used, for example by a processor of a computer, to determine how the primary exposure parameter(s) should be varied with location to avoid defects in the resultant part. This may reduce parameter development time as multiple exposure parameters for different region types, such as core and overhangs, may not need to be determined empirically.

The method may comprise determining the exposure parameters such that the exposure parameters vary gradually, for example in a direction towards a perimeter of the region to be irradiated. "Varying gradually" as used herein means a change in exposure parameters occurs across a plurality of successive locations that are to be irradiated by the energy beam, rather than in a single step change. By using gradually varying exposure parameters, defects caused by a step change in the exposure parameters are avoided.

The exposure parameters may be determined using a continuous function associating values of the geometric quantity to values for the exposure parameter (although the exposure parameters may be quantised such that a final value for each exposure parameter is given by the nearest allowable discrete value (of a plurality of allowable discrete vales) to the value determined using the continuous function, e.g. changes in exposure time may only be allowable in $2\mu s$ steps). Reducing or eliminating step changes in the exposure parameters is desirable as it may reduce or eliminate defects in the object.

The geometric quantity may be a dimensional measure including the location of irradiation. The dimensional measure may a measure of distance. The dimensional measure may be a length from the location of irradiation to the surface of the object (such as the closest point on the surface), a length of a line segment (such as the shortest line segment) between two points on the surface of the object and passing through the location of irradiation (for example, the exposure parameters may be varied for narrow sections), an area of a region of the object including the location of irradiation and/or a volume of the object including the location of irradiation.

The geometric quantity may be the distance from the location of the irradiation to a (yet to be built) surface of the object above the location of irradiation.

Alternatively or additionally, the geometric quantity may be the distance in the plane of the layer from the location of the irradiation to a surface of the object.

Alternatively or additionally, the geometric quantity may be a thickness of solidified material below the location of the irradiation.

The measure of distance may be relative to a threshold distance below which the exposure parameters are to be varied, for example, from the primary scan parameters.

The measure of distance may be a number of solidified layers (possibly including partial layers) above or below the location of the irradiation. The threshold distance may be a threshold number of solidified layers. The primary exposure parameter(s) may be selected, such as through empirical testing, for a specified layer thickness. Accordingly, choosing when to vary the exposure parameter from the primary exposure parameter based on number of layers rather than an absolute measure of distance means the algorithm is applicable to primary exposure parameters determined for a number of different layer thicknesses. The exposure parameter may be determined by scaling the primary exposure parameter by a ratio of the measure of distance to the threshold distance.

The threshold thickness may be greater than 10, 20, 30, 40 or 50 layers.

The primary exposure parameter may comprise a maximum value for the exposure parameter (for example, used for a core/bulk of the object) and a minimum value for the exposure parameter (for example, used in a peripheral region of the object) and the exposure parameter may be determined to be a value between (and, preferably, including) the maximum and minimum values based upon the geometric quantity. The maximum value may be used for the exposure parameter when the measure of distance is equal to or greater than the threshold distance and a value between the maximum and minimum values when the measure of distance is less than the threshold distance.

The exposure parameter may be selected from the group of: energy beam parameters, such as energy beam power, and/or exposure time; scanning parameters, such as point distance, scan speed, spot size/focal position and/or spot shape; scan path parameters, such as hatch distance (distance between adjacent scan paths), and/or scan path length; and time between exposing adjacent points/regions. Adjacent points/regions may be adjacent exposure points or adjacent regions, such as squares or stripes, including a plurality of scan paths and/or exposure points. It will be understood that the term "exposure parameter" as used herein does not include attributes of a scan path, such as location or shape of the scan path, although determination of a location or shape of a scan path may be affected by the exposure parameters (for example, through variations in hatch distance between a set of scan paths).

The minimum power may be between a quarter and three-quarters of the maximum power. The minimum exposure time may be between a half and seven-eighths of the maximum exposure time. The minimum point distance may be between a half and seven-eighths of the maximum point distance. The minimum hatch distance may be between sixth tenths and nine-tenths of the maximum hatch distance. In some embodiment, some of beam parameters may not be varied (i.e. have the same maximum and minimum values).

An additive manufacturing apparatus may comprise a plurality of scanners, each scanner capable of scanning an energy beam independently from the other scanners. One or more of the scanners may be used to irradiate the region in the layer in accordance with the determined exposure parameters. Accordingly, a time between exposing adjacent points/regions may apply to exposure of the adjacent points/regions by any one of the energy beams. Therefore, the scanner(s) may need to be controlled such that a required timing between exposures is achieved, for example using deterministic control of the scanner(s), as described in WO 2017/085469, which is incorporated herein by reference.

The method may comprise determining scan paths for the energy beam, for example the energy beam may progress along the scan path as a continuous scan or as a series of discrete exposures, and the exposure parameter is determined to vary as the energy beam progresses along the scan path (e.g. energy beam power, scan speed, exposure time, point distance, time between exposing adjacent points/regions, spot size/focal position and/or spot shape may vary as the energy beam progresses along a scan path). In particular, it may be advantageous to vary the scan parameter as the energy beam moves towards or away from a perimeter of the object.

Alternatively, the method may comprise determining the exposure parameters to be used for different portions of the region to be irradiated from the geometric quantity of the object measured from the locations and scan paths are determined to follow isolines of equal exposure parameters (e.g. an exposure parameter then scan path determination regime). This may be advantageous as a speed at which the energy beam is progressed along such scan paths may not be limited by the dynamic capability of a scanner of an additive manufacturing apparatus to change a scanning parameter. Furthermore, it may be possible to seamlessly change the hatch distance for scan paths that follow the isolines.

The method may comprise determining an exposure parameter for each location based on a thermal quantity, for example a temperature of the solidified material or powder bed measured during a build and or a predicted temperature of the solidified material or powder bed determined from a thermal model, for example at the location irradiation.

The method may comprise outputting the powder bed fusion instructions, for example to a powder bed fusion apparatus.

The powder may be a metal powder, such as steel (e.g. a maraging steel, 316 grade steel or a tool steel), aluminium or an aluminium alloy, titanium or a titanium alloy (e.g. Ti-6AL-4V), a nickel superalloy (e.g. Hastelloy, Rene 41 or CM247) or cobalt-chrome.

According to a second aspect of the invention there is provided a data carrier having instructions stored thereon, which, when executed by a processor, cause the processor to carry out the method of the first aspect of the invention.

According to a third aspect of the invention there is provided a powder bed fusion method in which an object is built in a layer-by-layer manner by selectively irradiating areas of successively formed powder layers with an energy beam, the method comprising irradiating a layer with the energy beam in accordance with a set of exposure parameters, the exposure parameters of the set varying with location of irradiation.

Each exposure parameter for each location may be determined from a primary exposure parameter, wherein an amount each exposure parameter varies from the primary exposure parameter is determined, at least in part, from a geometric quantity of the object derived from a location of the irradiation. The exposure parameters of the set may vary gradually with changes in thickness of solidified material underlying the locations of irradiation.

The radiant energy may decrease gradually with decreases in the thickness of solidified material underlying the different locations of irradiation.

According to a fourth aspect of the invention there is provided a powder bed fusion apparatus comprising an irradiation device for directing an energy beam to selected regions of a working plane, a layer formation device for forming layers of powder in the working plane and a controller arranged to control the irradiation device to direct the energy beam onto successively formed powder layers to melt and/or sinter the powder material, thereby building an object in a layer-by-layer manner, wherein the irradiation device is controlled to carry out the method of the third aspect of the invention.

According to a fifth aspect of the invention there is provided a data carrier having instructions stored thereon, which, when executed by a controller of a powder bed fusion apparatus, cause the controller to control the powder bed fusion apparatus to carry out the method of the third aspect of the invention.

The data carrier may be a suitable medium for providing a machine with instructions such as non-transient data carrier, for example a floppy disk, a CD ROM, a DVD ROM / RAM (including - R/-RW and +R/ + RW), an HD DVD, a Blu Ray(TM) disc, a memory (such as a Memory Stick(TM), an SD card, a compact flash card, or the like), a disc drive (such as a hard disc drive), a tape, any magneto/optical storage, or a transient data carrier, such as a signal on a wire or fibre optic or a wireless signal, for example signals sent over a wired or wireless network (such as an Internet download, an FTP transfer, or the like).

**Description of Drawings**

Figure 1 is a schematic view of a powder bed fusion additive manufacturing apparatus according to an embodiment of the invention;

Figure 2 is a schematic illustrating various exposure parameters used in this embodiment of the invention;

Figure 3 is a diagram illustrating the calculation of the scaling factor used to determine the energy beam parameter from the primary energy beam parameter;

Figure 4 illustrates locating scan paths along isolines of exposure parameters and variations in hatch distance between scan paths;

Figures 5a and 5b show part geometry and an arrangement of the parts on a build plate of an Example 1;

Figures 6a and 6b are tables showing the exposure parameters used for the parts of Example 1;

Figure 7 is a table showing the results of the build of the parts of Example 1.

Figures 8a, 8b and 8c show different scanning strategies tested in Example 2;

**Figures 9a and 9b** are tables showing the exposure parameters used for the parts of Example 2;

**Figure 10** is a table showing the results of the build of parts of Example 2.

**Figures 11a and 11b** are tables showing the exposure parameters used for the parts of Example 3;

**Figure 12** is a table showing the results of the build of parts of Example 3.

**Figures 13a and 13b** are tables showing the exposure parameters used for the parts of Example 4;

**Figure 14** is a table showing the results of the build of parts of Example 4.

**Figure 15** is a table showing the angle, thickness and length of parts according to Example 5;

**Figure 16** is a table showing the exposure parameters used for the parts of Example 5; and

**Figure 17** is a picture of the parts of Example 5.

**Description of Embodiments**

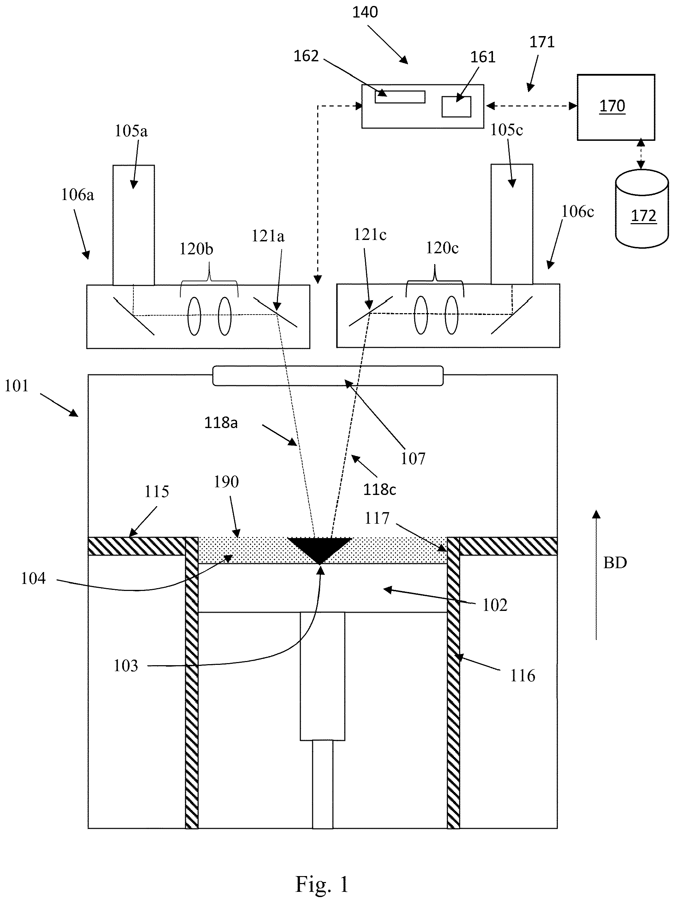

Referring to Figure 1, a powder bed fusion additive manufacturing apparatus according to an embodiment of the invention comprises a build chamber 101 sealable from the external environment such that an inert atmosphere (in this embodiment, argon, although other inert gases may be used such as nitrogen or helium) can be maintained therein. Within the build chamber 101 are a processing plate 115 and a build sleeve 116. A build platform 102 is lowerable in the build sleeve 116 to define a build volume 117. The build platform 102 supports a powder bed 104 and workpiece (object) 103 as the workpiece is built by selective laser melting of the powder. The platform 102 is lowered within the build sleeve 117 under the control of a drive (not shown) as successive layers of the workpiece 103 are formed.

Layers of powder 104 are formed as the workpiece 103 is built by a layer formation device, in this embodiment a dispensing apparatus and a wiper (not shown). For example, the dispensing apparatus may be apparatus as described in WO2010/007396. The dispensing apparatus dispenses powder onto an upper surface defined by the processing plate 115 and is spread across the powder bed by a wiper (not shown). A position of a lower edge of the wiper defines a working plane 190 at which powder is consolidated. In another embodiment, the powder layer may be formed in the working plane 190 by a non-contact recoater. A build direction BD is perpendicular to the working plane 190.

A plurality of laser modules 105a, 105c generate laser beams 118a, 118c, for melting the powder 104, the laser beams 118a, 118c directed as required by a corresponding optical module (scanner) 106a, 106c. The laser beams 118a, 118c, enter through a common laser window 107. Each optical module comprises steering optics 121, such as two mirrors mounted on galvanometers, for steering the laser beam 118 in perpendicular directions across the working plane and focussing optics 120, such as two movable lenses for changing the focus of the corresponding laser beam 118. The scanner is controlled such that the focal position of the laser beam 118 remains in the working plane 190 as the laser beam 118 is moved across the working plane. Rather than maintaining the focal position of the laser beam in a plane using dynamic focusing elements, an f-theta lens may be used.

An inlet and outlet (not shown) are arranged for generating a gas flow across the powder bed formed on the build platform 102. The inlet and outlet are arranged to produce a laminar flow having a flow direction from the inlet to the outlet. Gas is re-circulated from the outlet to the inlet through a gas recirculation loop (not shown).

A controller 140, comprising processor 161 and memory 162, is in communication with modules of the additive manufacturing apparatus, namely the laser modules 105a, 105b, 105c, 105d, optical modules 106a, 106b, 106c, 106d, build platform 102, dispensing apparatus 108 and wiper. The controller 140 controls the modules based upon software stored in memory 162 as described below.

The controller 140 controls the plurality of laser 106a, 106c and scanners 105a, 105c using deterministic control, wherein the command signals specify a time of execution (rather than simply being queued), as described in WO 2017/085469, which is incorporated herein by reference. In this way, accurate control over a timing between irradiation of the powder by each laser beam 118a, 118c can be achieved.

In use, a computer 170 receives a geometric model, such as an STL file, describing a three-dimensional object to be built using the powder bed fusion additive manufacturing apparatus. The computer 170 slices the geometric model into a plurality of slices to be built as layers in the powder bed fusion additive manufacturing apparatus based upon a defined layer thickness.

The computer may comprise an interface arranged to provide a user input for selecting the material from which the object is to be built. The computer determines exposure parameters based upon the material identified by the user.

For example, the computer 170 may comprise memory 172 having stored therein a database of primary (bulk) exposure parameters that are suitable for the identified material. A laser exposure pattern is determined for melting areas of each layer to form the corresponding cross-section (slice) of the object along with exposure parameters to be used for different locations in the exposure pattern. Based upon these determinations, the computer 170 generates powder bed fusion instructions that are sent to controller 140, such as over a network connection 171, to cause the additive manufacturing apparatus to carry out a build in accordance with the powder bed fusion instructions.

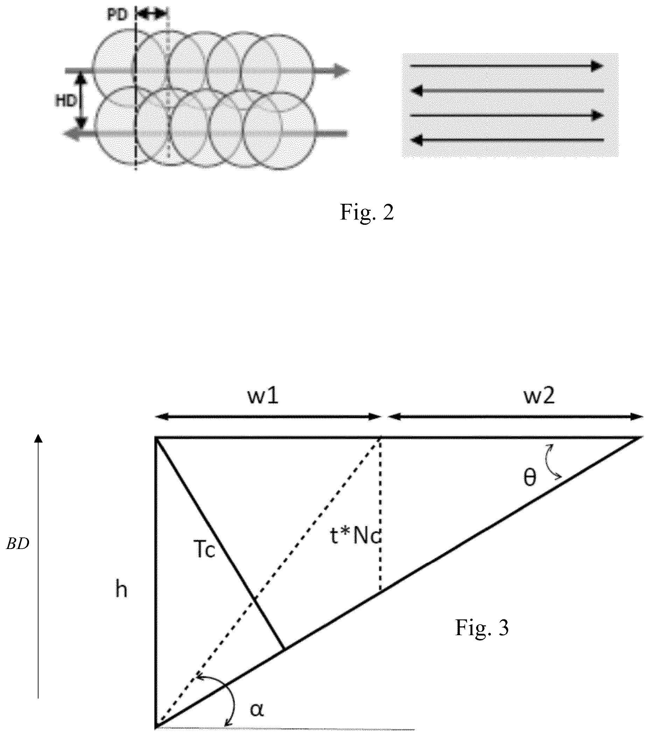

Referring to Figures 2, exposure parameters for each location to be irradiated with the laser beam are determined based upon a geometric quantity of the object derived from the location of the irradiation, in this embodiment a thickness of solidified material beneath the location. This may result in the exposure parameters varying with location.

The exposure parameters may comprise energy beam source/laser parameters achieved through control of the energy beam source/laser 105a, 105c, such as laser beam power and exposure time; scanning parameters achieved through control of the scanners 106a, 106c and specifying how the energy beam/laser beam is progressed along a scan path, such as scan speed, point distance (PD), time between exposing adjacent points/regions, spot size/focal position and spot shape; and scan path parameters specifying attributes of a set of scan paths, such as distance between scan paths (hatch distance (HD)) and maximum or minimum lengths for a set of scan paths. In this embodiment, scan paths are scanned bidirectionally, however, it will be understood that scan paths may be scanned in a single direction. The scan direction(s) may be the same for all layers or the directions may be rotated, for example by a set angle, between layers such that scan paths for consecutive layers are not parallel.

On receiving a selection of a material by the user, the computer 170 retrieves from the database a primary set of exposure parameters. For each exposure parameter (variable exposure parameter) that can be gradually varied across a layer, a maximum value, $E_{max}$, and minimum value, $E_{min}$, is provided in the database. For exposure parameters that remain unchanged (fixed exposure parameter) when applying that particular set of parameters, a single value for the exposure parameter is provided or $E_{max}$, and $E_{min}$ are set to the same value. In a system wherein the scan paths are determined before determining a gradual variation in the variable exposure parameters for irradiation locations along the scan paths, scan path parameters are fixed. In a system wherein the scan paths are determined after or iteratively with determination of a gradual variation in the variable exposure parameters with location, scan path parameters may be variable.

In this embodiment, a variation in the variable exposure parameters is determined based upon a thickness of solidified material below a location of irradiation. An exposure parameter, E, at a location is determined in accordance with the following equation: -

$$ E = \left(\frac{N_x}{N_c}\right)^{order} \times (E_{max} - E_{min}) + E_{min} \qquad (1) $$

wherein $N_x$ is the number of layers of solidified material below the location of irradiation (measured in the build direction *BD*), $N_c$ is a preset threshold number of layers below which the exposure parameter is varied from the maximum value, $E_{max}$, for the exposure parameter and *order* is a positive real number, and typically an integer. In this embodiment, *order* has a value from 1 to 5, and preferably is 3. When $N_x$ is equal to or greater than $N_c$, E is equal to $E_{max}$. When $N_x$ is equal to 0, E is equal to $E_{min}$. Between these values for $N_x$, E is a value between $E_{max}$ and $E_{min}$ and will vary gradually if the thickness of solidified material below the location of irradiation varies gradually. Typically, objects to be additive manufactured will be designed not to have step changes in thickness in the build direction *BD*.

$N_x$ may be determined by:

$$ N_x = \frac{T_x}{t} \qquad (2) $$

where $T_x$ is the thickness of the solidified material below a location of irradiation at position x and t is the layer thickness. If $T_x$ is calculated from a geometric model of the object before the layers are determined, then $N_x$ may have a non-integer value. $N_c$ is typically greater than 10, preferably greater than 30 and most preferably greater than 40.

It will be understood that, in other embodiments, other functions of $N_x$ and $N_c$ may be used. For at least part of the function, the exposure parameter gradually varies with changes in $N_x$, typically the energy density reducing as $N_x$ reduces.

Figure 3 shows a wedge-shaped overhang section of an object, with a dotted line labelled $t*N_c$ indicating where the thickness in the build direction *BD* transitions from being greater than the critical thickness $t*N_c$ to being less than the critical thickness $t*N_c$. This method of calculating the variable exposure parameters may result in a non-dynamic region *w1*, where the exposure parameter is not varied, and a dynamic region *w2*, where the exposure parameter is varied. A size of the dynamic region *w2* will vary with the angle, $\theta$, of the wedge-shaped overhang section. Unlike the prior art method of making a step change in exposure parameters when an angle of the overhang region to the build plane is below a threshold angle, the invention dynamically changes the exposure parameters for all angles of the overhang, only changing a length *w2* of the dynamic region across which the exposure parameters are varied. In addition, the change in exposure parameters is a gradual change, as determined by (1), rather than a step change in exposure parameters.

In a first embodiment, the scan path parameters are fixed exposure parameters, and, for each layer, scan paths are determined based on the fixed scan path parameters. Once the scan paths have been determined, exposure parameters are determined for each irradiation location along the scan paths. The variable exposure parameters may be laser power, exposure time and point distance.

Such an embodiment has the advantage of decoupling the determination of scan paths from the determination of variable exposure parameters. However, it limits the degrees of freedom available for changing the radiant energy input into a part of the layer. For example, the lasers 106a, 106c may not operate steadily at lower laser powers and therefore, lowering the laser power below a particular minimum value in order to achieve lower radiant energy may not be achievable. To achieve a desired outcome, it may be necessary to reduce other exposure parameters, such as hatch distance.

In a second embodiment, the variable exposure parameters or at least isolines of irradiation locations on a layer, which are associated with constant thickness $N_x$ and thus will have the same exposure parameters in accordance with (1), are determined before the scan paths. Scan paths can then be determined based on the determined exposure parameters/isolines. Such an embodiment may allow variation in scan path parameters, such as hatch distance. To avoid discontinuities in the scan paths for varying scan path parameters, it may be desirable for the scan paths to coincide with the isolines of constant exposure parameters. In this way, a hatch distance between neighbouring scan paths may be varied whilst avoiding discontinuities in the scan paths.

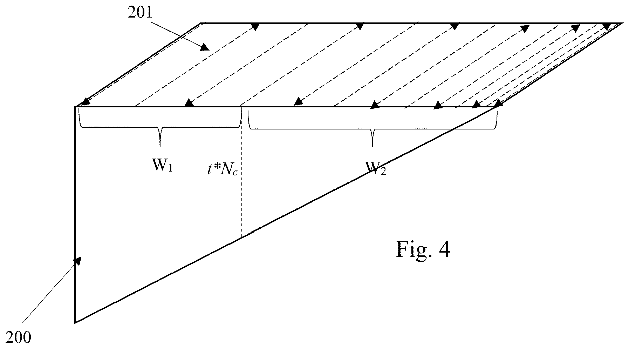

An illustrative example of such a method applied to a wedge-shaped object 200 is shown in Figure 4. As can be seen, for a non-dynamic region w1, where the thickness of solidified material below the irradiation locations is above the threshold thickness $N_c$, the scan paths are equidistant (equal hatch distance) and the exposure parameters are the same. For the dynamic region w1, where the thickness of solidified material below the irradiation locations is below the threshold thickness $N_c$, the hatch distance between scan paths decreases as the wedge gets thinner and there is a corresponding change in exposure parameters between the scan paths of this region, although along each scan path the exposure parameters remain the same. For this example, the scan paths are shown as straight, however for a different shaped object the scan paths may have a different, curved shape.

WO2014/006094 discloses scan paths based upon a geometric contour of a region to be fused within a layer. The invention is different to this in that the scan paths would not necessarily follow the contour of the region but the location of the scan paths is defined by lines of identical exposure parameters, which, in this embodiment, are defined by the underlying thickness of solidified material.

**Example 1**

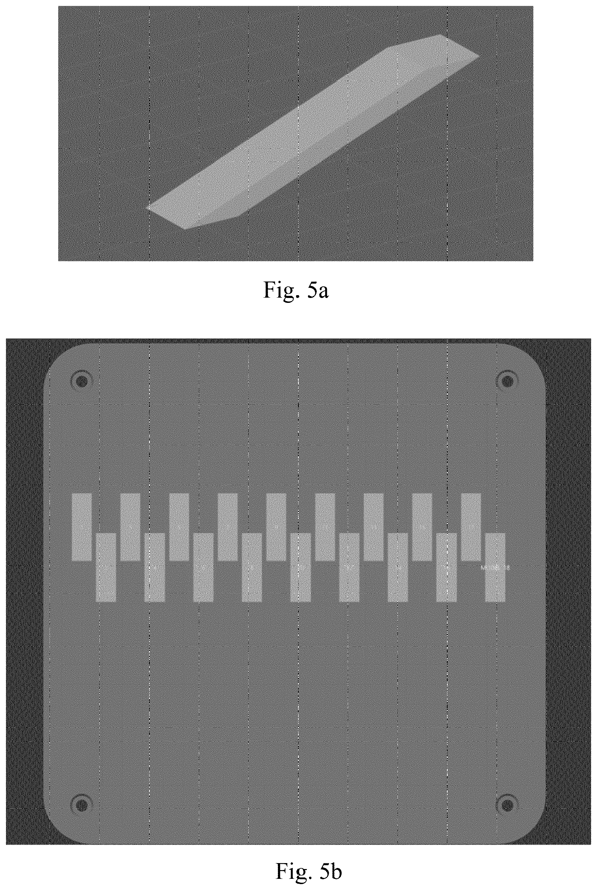

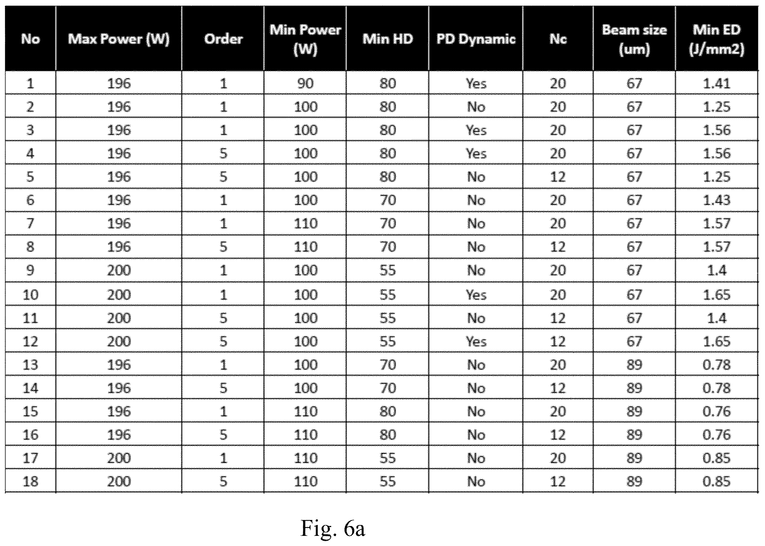

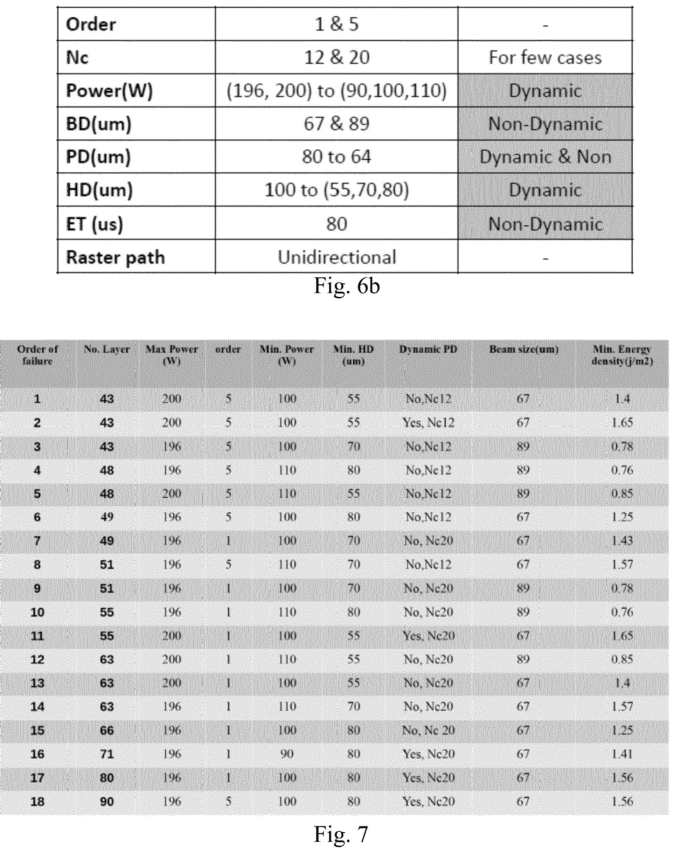

Eighteen parts having the geometry shown in Figure 5a were built on a build plate in the arrangement as shown in Figure 5b. The parts formed a slope at 20° to the working plane 190 and had a 2mm thickness. The layer thickness was 30 $\mu$m. The parameters used to build the parts are shown in Figure 6a with dynamic laser power and hatch distance (HD) parameters (between Max HD of 100$\mu$m and Min HD as shown in Figure 6a) for all parts and dynamic point distance parameters for some of the parts. The beam size was fixed, although some parts were built with a fixed 67$\mu$m beam diameter and other parts with a fixed 89$\mu$m beam diameter. Exposure time was fixed at 80 $\mu$s. The laser beam is progressed along the scan paths unidirectionally.

Equation (1) was used to determine a dynamic change in exposure parameters for the object. *Nc* values of 12 and 20 were used and *orders* of 1 and 5.

As can be seen from Figure 7, all parts eventually failed, but parts whose dynamic parameters were determined using 12 as the *Nc* value failed earlier than those that used 20. Bulk parameters having a lower energy density also appear to produce a better result.

The bulk exposure parameters were changed from the initial exposure parameters of: -

Power=200W; Beam distance=67$\mu$m; Exposure time=50$\mu$s; Point distance=65$\mu$m; hatch distance=65$\mu$m; resulting in an energy density of 2.37 J/mm$^2$.

to the new bulk exposure parameters of: -

Power=195W; Beam distance=67$\mu$m; Exposure time=80$\mu$s; Point distance=80$\mu$m; hatch distance=100$\mu$m; resulting in an energy density of 1.95 J/mm$^2$.

EP 4 008 456 A1

**Example 2**

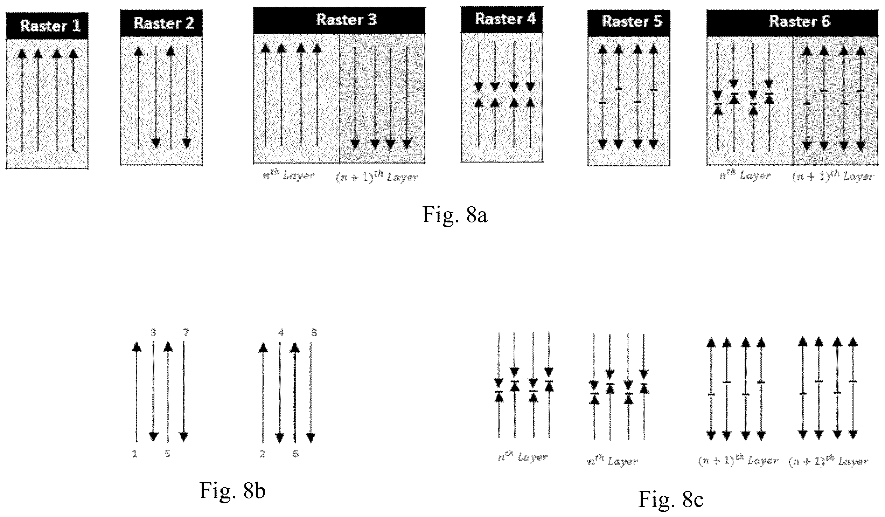

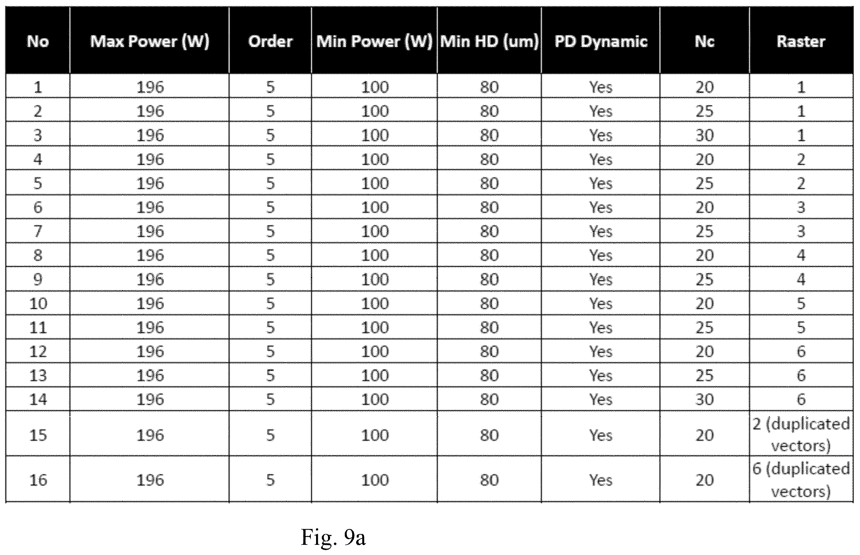

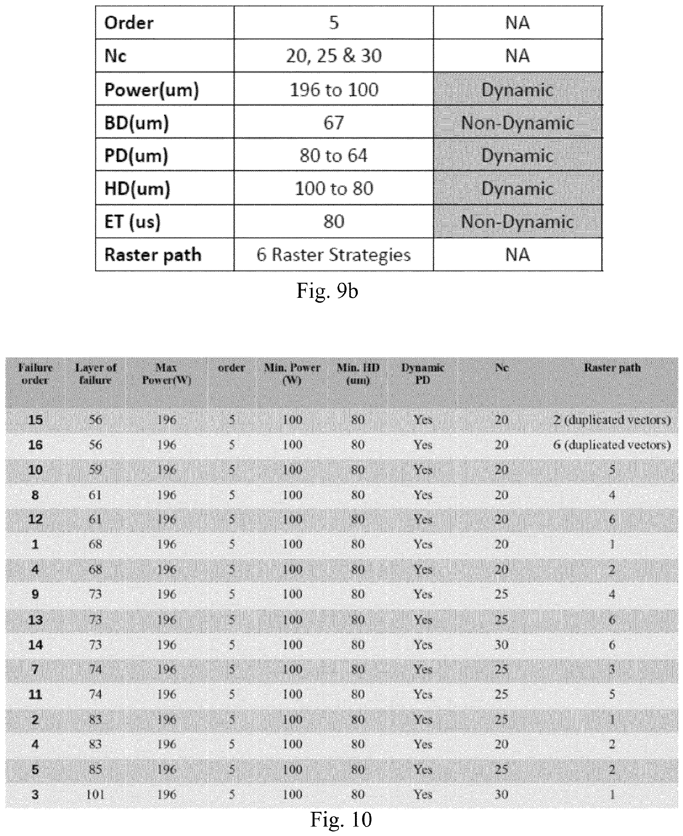

Sixteen parts having the geometry shown in Figure 5a were built on a build plate in a similar arrangement to that shown in Figure 5b. The layer thickness was 30 $\mu$m and the new bulk exposure parameters were used. The exposure parameters of power, hatch distance and point distance were all dynamically varied in accordance with equation (1). The order used was 5 and Nc values of 10, 25 and 30 were used for different parts. Various scanning strategies were used, as illustrated in Figures 8a, 8b and 8c. The tables of Figure 9a and 9b show the exposure parameters and the *Nc* values and scan path strategy used for each part. The minimum energy density is 1.56 J/mm$^2$.

The table in Figure 10 illustrates the order in which the parts failed. Scan path strategies 1 and 2 failed later than other scan strategies, with scan path strategy 2 producing slightly better results. Parts using a higher Nc value appear to fail later.

**Example 3**

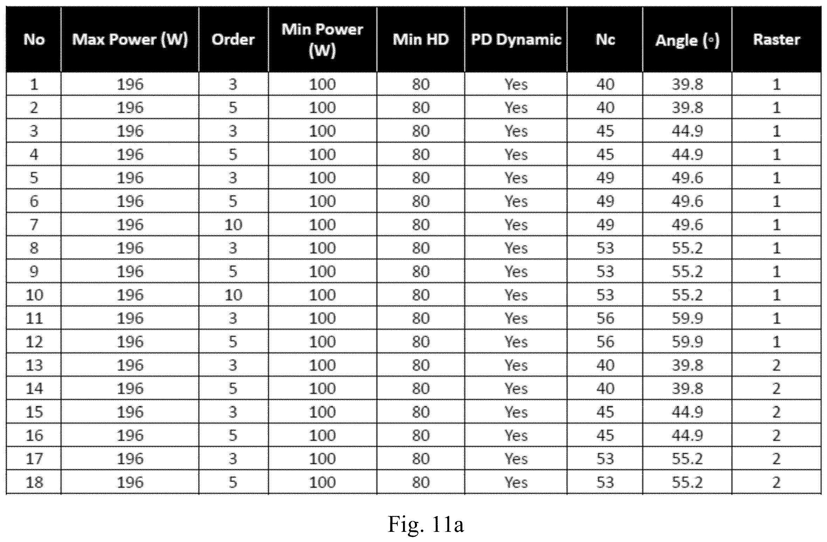

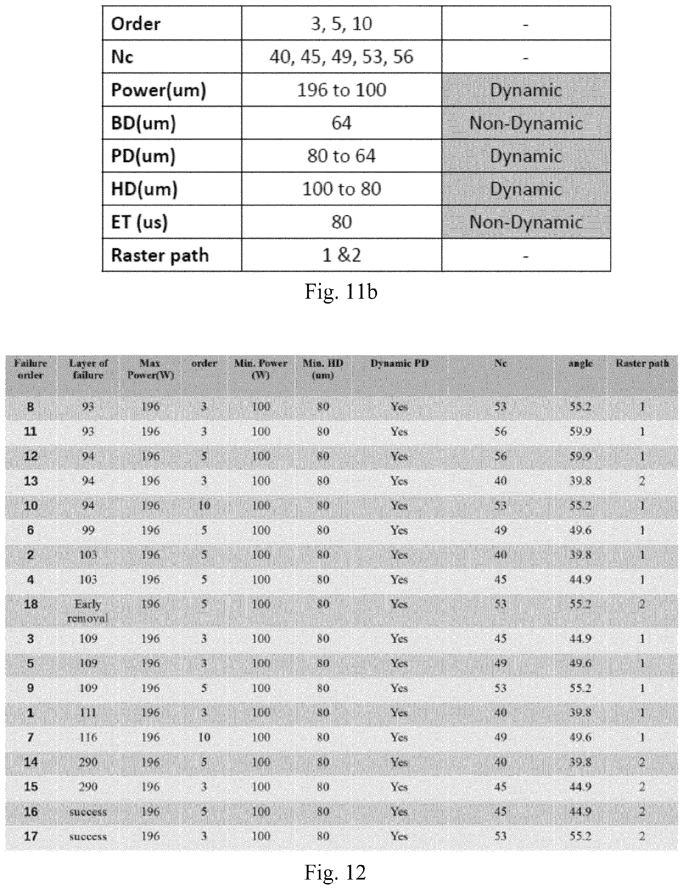

Eighteen parts having the geometry similar to that shown in Figure 5a but built at various angles on a build plate relative to the build plane. The parts were built in a similar arrangement to that shown in Figure 5b. The layer thickness was 30 $\mu$m and the new bulk exposure parameters were used. The exposure parameters of power, hatch distance and point distance were all dynamically varied in accordance with equation (1). *Orders* of 3, 5 and 10 and *Nc* values between 40 and 56 were used for different parts. Scan strategies 1 and 2 were used. The tables of Figures 11a and 11b show the exposure parameters, Nc value and scan path strategy used for each part.

Figure 12 shows the order in which the parts failed during the build. Scan path strategy 2 (bidirectional scanning) appeared to produce better results. Successful builds were achieved with both order 3 and order 5.

**Example 4**

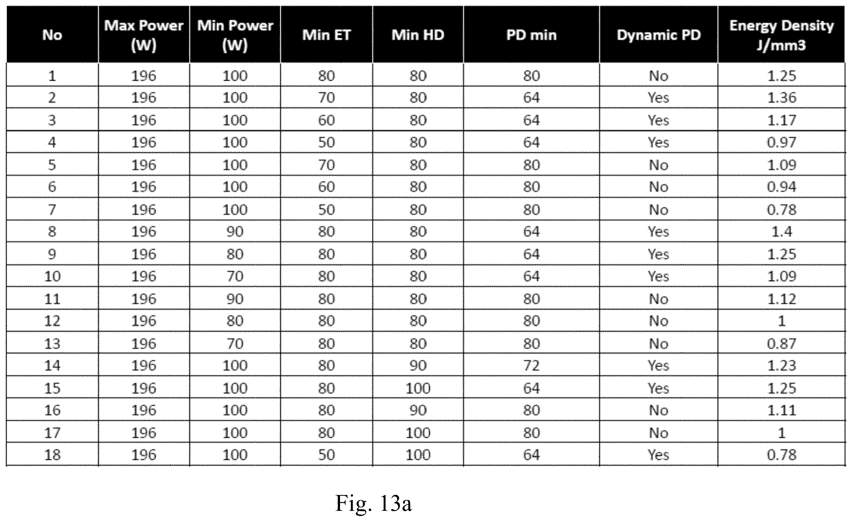

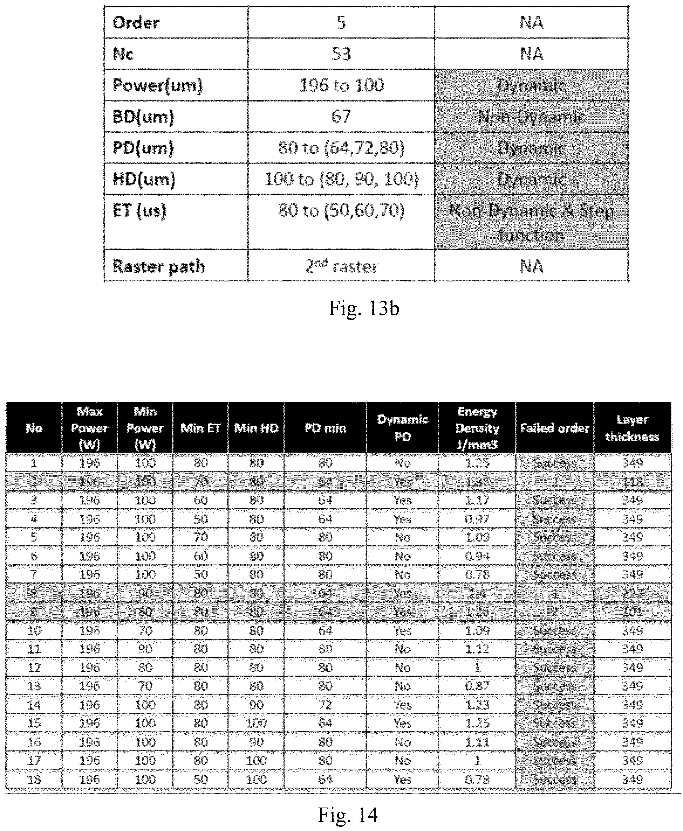

Eighteen parts having the geometry similar to that shown in Figure 5a. The parts were built in a similar arrangement to that shown in Figure 5b. The layer thickness was 30 $\mu$m and the new bulk exposure parameters were used. The exposure parameters of power, hatch distance, point distance and exposure distance were dynamically varied in different combinations for different parts in accordance with equation (1). *Orders* of 3, 5 and 10 and *Nc* values between 40 and 56 were used for different parts. Variation of the exposure time was by steps of 2$\mu$s in accordance with equation (1) rather than as a smooth function. Scan strategies 1 and 2 were used. The tables of Figures 13a and 13b show the exposure parameters, *Nc* value and scan path strategy used for each part.

As can be seen from Figure 14, the majority of parts were successfully built. In comparison to Example 3, a noticeable improvement in the quality of up and down-skin areas was achieved. From optical analysis of the parts, part 17 was deemed to be the highest quality. For part 17, exposure time, hatch distance and point distance were all fixed, with only the power dynamically altered in accordance with equation (1). However, as can be seen from the other successful builds in this example, it is possible to dynamically vary these other exposure parameters without resulting in build failure.

**Example 5**

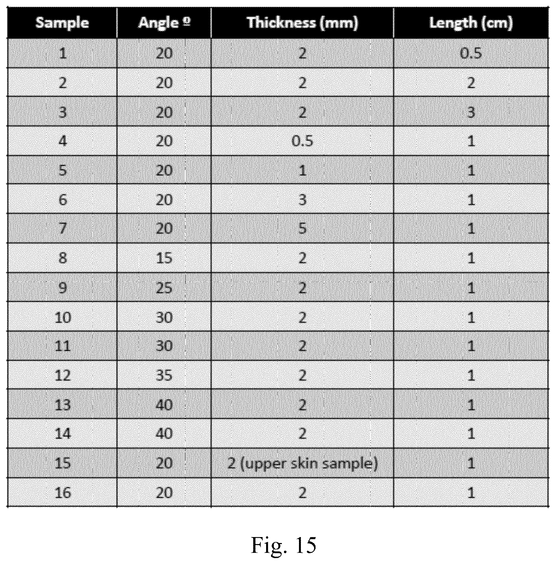

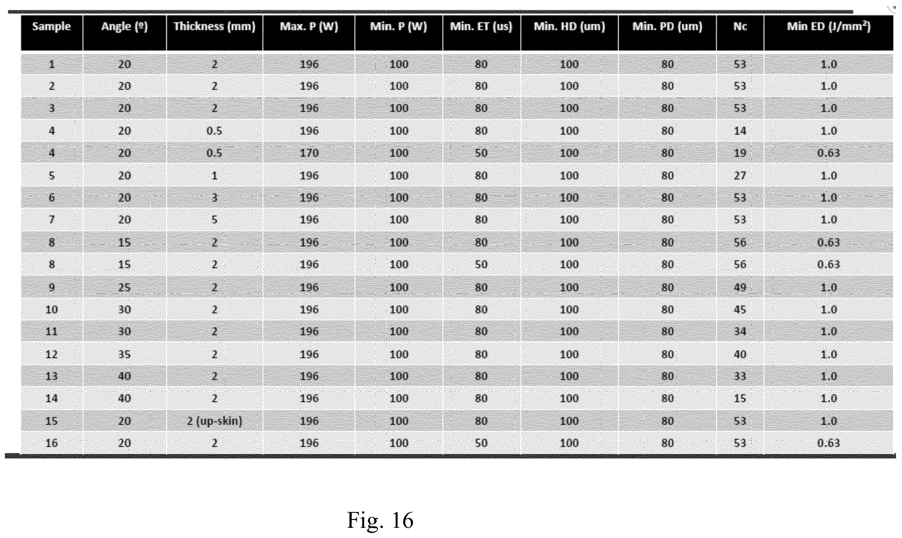

Sixteen parts having the geometry similar to that shown in Figure 5a but at various angles to the working plane, different thicknesses and different lengths, as set out in Figure 15. The layer thickness was 30 $\mu$m and the new bulk exposure parameters were used. The laser power was dynamically varied in accordance with equation (1) for all the parts and the exposure time was dynamically varied for parts 4, 8 and 16. *Order* 3 was used. *Nc* values of between 15 and 56 were used for different parts. The tables of Figure 16 show the angle, thickness, exposure parameters, and *Nc* value used for each part.

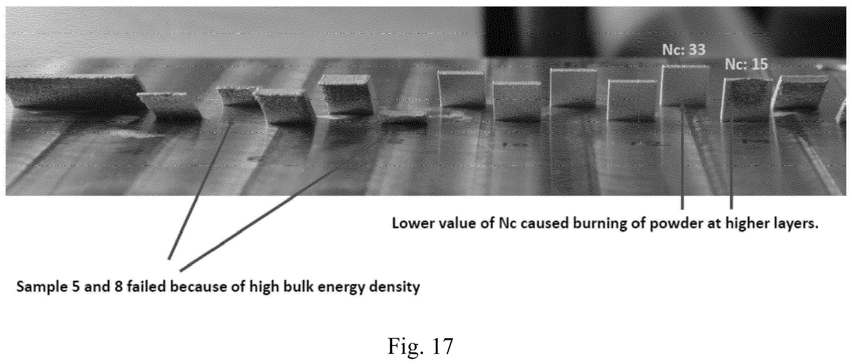

Referring to Figure 17, samples 5 and 8 failed because of high bulk energy densities. The remaining parts were built successfully. Parts 13 and 14, whose exposure parameters were calculated using lower *Nc* values, exhibited signs of burning of powder at higher layers. 25° to 40° walls were built with no burning of powder and material depletion. 15° and 20° walls with 0.5mm thickness were printed by using lower bulk power, fixing the problem with burning of powder. Eliminating the burning of powder resolves issues with material depletion.

It will be understood that modifications and alterations to the above described embodiments can be made without departing from the invention as defined herein. For example, other geometric properties of the object may be taken into account in determining exposure parameters for the variable exposure parameters. Also, the equation for determining the exposure parameters may be different, for example it may including multiple terms of different orders based on the measurement of thickness and/or use a combination of different geometric measurements of the object to determine the exposure parameter.

8

**EP 4 008 456 A1**

Other variable exposure parameters may be used, such as time between exposure of adjacent exposure points/regions.

**Claims**

1.  A method of determining instructions to be executed by a powder bed fusion apparatus, in which an object is built in a layer-by-layer manner by selectively irradiating regions of successively formed powder layers with an energy beam, the method comprises determining an exposure parameter for each location within a layer to be irradiated with the energy beam from a primary exposure parameter, the exposure parameters varying with location, and an amount each exposure parameter varies from the primary exposure parameter is determined, at least in part, from a geometric quantity of the object derived from the location of the irradiation.

2.  A method according to claim 1, comprising determining the exposure parameters such that the exposure parameters vary gradually across a plurality of irradiation locations.

3.  A method according to claim 1 or claim 2, wherein the geometric quantity is a dimensional measure including the location of irradiation.

4.  A method according to claim 3, wherein the dimensional measure is:

    i) a length from the location of irradiation to the surface of the object; or
    ii) a length of a line segment between two points on the surface of the object and passing through the location of irradiation; or
    iii) an area of a region of the object including the location of irradiation; or
    iv) a volume of the object including the location of irradiation; or
    v) a distance from the location of the irradiation to a surface of the object above the location of irradiation; or
    vi) a distance in the plane of the layer from the location of the irradiation to a surface of the object; or
    v) a measure of thickness of solidified material below the location of the irradiation, wherein the measure of thickness may be the thickness of solidified material below the location of the irradiation relative to a threshold thickness or the measure of thickness may be a number of solidified layers below the location of the irradiation, wherein the threshold thickness may be a threshold number of solidified layers.

5.  A method according to any one of claims 4, wherein the exposure parameter is determined by scaling the primary exposure parameter by a ratio of the thickness of solidified material below the location of the irradiation to the threshold thickness.

6.  A method according to any one of the preceding claims, wherein the primary exposure parameter comprises a maximum value for the exposure parameter and a minimum value for the exposure parameter and the exposure parameter is determined to be a value between the maximum and minimum values based upon the geometric quantity.

7.  A method according to any one of the preceding claims comprising determining scan paths for the energy beam, and the exposure parameter is determined to vary as the energy beam progresses along the scan path.

8.  A method according to any one of claims 1 to 7, comprising determining the exposure parameters to be used for different portions of the region to be irradiated from the geometric quantity of the object measured from the locations, and scan paths are determined to follow isolines of equal exposure parameters.

9.  A data carrier having instructions stored thereon, which, when executed by a processor, cause the processor to carry out the method of any one of claims 1 to 8.

10. A powder bed fusion method in which an object is built in a layer-by-layer manner by selectively irradiating areas of successively formed powder layers with an energy beam, the method comprising irradiating a layer with the energy beam in accordance with a set of exposure parameters, the exposure parameters of the set varying with location of irradiation, and each exposure parameter for each location is determined from a primary exposure parameter, wherein an amount each exposure parameter varies from the primary exposure parameter is determined, at least in part, from a geometric quantity of the object derived from a location of the irradiation.

9

11. A powder bed fusion method in which an object is built in a layer-by-layer manner by selectively irradiating regions of successively formed powder layers with an energy beam, the method comprising irradiating a layer with the energy beam in accordance with a set of exposure parameters, wherein the exposure parameters of the set vary gradually with changes in thickness of solidified material underlying the locations of irradiation.

12. A powder bed fusion method in which an object is built in a layer-by-layer manner by selectively irradiating regions of successively formed powder layers with an energy beam, the method comprising irradiating a layer with the energy beam such that a radiant energy delivered to the powder by the energy beam at different locations within the region changes gradually with changes in thickness of solidified material underlying the different locations of irradiation.

13. A powder bed fusion method according to claim 12, wherein the radiant energy decreases gradually with decreases in the thickness of solidified material underlying the different locations of irradiation.

14. A powder bed fusion apparatus comprising an irradiation device for directing an energy beam to selected regions of a working plane, a layer formation device for forming layers of powder in the working plane and a controller arranged to control the irradiation device to direct the energy beam onto successively formed powder layers to melt and/or sinter the powder material, thereby building an object in a layer-by-layer manner, wherein the irradiation device is controlled to carry out the method of any one of claims 10 to 13.

15. A data carrier having instructions stored thereon, which, when executed by a controller of a powder bed fusion apparatus, cause the controller to control the powder bed fusion apparatus to carry out the method of any one of claims 10 to 13.

Fig. 1

Fig. 2

Fig. 3

201

t*N_c

W_1

W_2

200

Fig. 4

Fig. 5a

Fig. 5b

| No | Max Power (W) | Order | Min Power (W) | Min HD | PD Dynamic | Nc | Beam size (um) | Min ED (J/mm2) |
|---|---|---|---|---|---|---|---|---|
| 1 | 196 | 1 | 90 | 80 | Yes | 20 | 67 | 1.41 |
| 2 | 196 | 1 | 100 | 80 | No | 20 | 67 | 1.25 |
| 3 | 196 | 1 | 100 | 80 | Yes | 20 | 67 | 1.56 |
| 4 | 196 | 5 | 100 | 80 | Yes | 20 | 67 | 1.56 |
| 5 | 196 | 5 | 100 | 80 | No | 12 | 67 | 1.25 |
| 6 | 196 | 1 | 100 | 70 | No | 20 | 67 | 1.43 |
| 7 | 196 | 1 | 110 | 70 | No | 20 | 67 | 1.57 |
| 8 | 196 | 5 | 110 | 70 | No | 12 | 67 | 1.57 |
| 9 | 200 | 1 | 100 | 55 | No | 20 | 67 | 1.4 |
| 10 | 200 | 1 | 100 | 55 | Yes | 20 | 67 | 1.65 |
| 11 | 200 | 5 | 100 | 55 | No | 12 | 67 | 1.4 |
| 12 | 200 | 5 | 100 | 55 | Yes | 12 | 67 | 1.65 |
| 13 | 196 | 1 | 100 | 70 | No | 20 | 89 | 0.78 |
| 14 | 196 | 5 | 100 | 70 | No | 12 | 89 | 0.78 |
| 15 | 196 | 1 | 110 | 80 | No | 20 | 89 | 0.76 |
| 16 | 196 | 5 | 110 | 80 | No | 12 | 89 | 0.76 |
| 17 | 200 | 1 | 110 | 55 | No | 20 | 89 | 0.85 |
| 18 | 200 | 5 | 110 | 55 | No | 12 | 89 | 0.85 |

Fig. 6a

| Order | 1 & 5 | - |
|---|---|---|
| Nc | 12 & 20 | For few cases |
| Power(W) | (196, 200) to (90,100,110) | Dynamic |
| BD(um) | 67 & 89 | Non-Dynamic |
| PD(um) | 80 to 64 | Dynamic & Non |
| HD(um) | 100 to (55,70,80) | Dynamic |
| ET (us) | 80 | Non-Dynamic |
| Raster path | Unidirectional | - |

Fig. 6b

| Order of failure | No. Layer | Max Power (W) | order | Min. Power (W) | Min. HD (um) | Dynamic PD | Beam size(um) | Min. Energy density(j/m2) |
|---|---|---|---|---|---|---|---|---|
| 1 | 43 | 200 | 5 | 100 | 55 | No,Nc12 | 67 | 1.4 |
| 2 | 43 | 200 | 5 | 100 | 55 | Yes, Nc12 | 67 | 1.65 |
| 3 | 43 | 196 | 5 | 100 | 70 | No,Nc12 | 89 | 0.78 |
| 4 | 48 | 196 | 5 | 110 | 80 | No,Nc12 | 89 | 0.76 |
| 5 | 48 | 200 | 5 | 110 | 55 | No,Nc12 | 89 | 0.85 |
| 6 | 49 | 196 | 5 | 100 | 80 | No,Nc12 | 67 | 1.25 |
| 7 | 49 | 196 | 1 | 100 | 70 | No, Nc20 | 67 | 1.43 |
| 8 | 51 | 196 | 5 | 110 | 70 | No,Nc12 | 67 | 1.57 |
| 9 | 51 | 196 | 1 | 100 | 70 | No, Nc20 | 89 | 0.78 |
| 10 | 55 | 196 | 1 | 110 | 80 | No, Nc20 | 89 | 0.76 |
| 11 | 55 | 200 | 1 | 100 | 55 | Yes, Nc20 | 67 | 1.65 |
| 12 | 63 | 200 | 1 | 110 | 55 | No, Nc20 | 89 | 0.85 |
| 13 | 63 | 200 | 1 | 100 | 55 | No, Nc20 | 67 | 1.4 |
| 14 | 63 | 196 | 1 | 110 | 70 | No, Nc20 | 67 | 1.57 |
| 15 | 66 | 196 | 1 | 100 | 80 | No, Nc 20 | 67 | 1.25 |
| 16 | 71 | 196 | 1 | 90 | 80 | Yes, Nc20 | 67 | 1.41 |
| 17 | 80 | 196 | 1 | 100 | 80 | Yes, Nc20 | 67 | 1.56 |
| 18 | 90 | 196 | 5 | 100 | 80 | Yes, Nc20 | 67 | 1.56 |

Fig. 7

Fig. 8a

Fig. 8b

Fig. 8c

EP 4 008 456 A1

| No | Max Power (W) | Order | Min Power (W) | Min HD (um) | PD Dynamic | Nc | Raster |
|---|---|---|---|---|---|---|---|
| 1 | 196 | 5 | 100 | 80 | Yes | 20 | 1 |
| 2 | 196 | 5 | 100 | 80 | Yes | 25 | 1 |
| 3 | 196 | 5 | 100 | 80 | Yes | 30 | 1 |
| 4 | 196 | 5 | 100 | 80 | Yes | 20 | 2 |
| 5 | 196 | 5 | 100 | 80 | Yes | 25 | 2 |
| 6 | 196 | 5 | 100 | 80 | Yes | 20 | 3 |
| 7 | 196 | 5 | 100 | 80 | Yes | 25 | 3 |
| 8 | 196 | 5 | 100 | 80 | Yes | 20 | 4 |
| 9 | 196 | 5 | 100 | 80 | Yes | 25 | 4 |
| 10 | 196 | 5 | 100 | 80 | Yes | 20 | 5 |
| 11 | 196 | 5 | 100 | 80 | Yes | 25 | 5 |
| 12 | 196 | 5 | 100 | 80 | Yes | 20 | 6 |
| 13 | 196 | 5 | 100 | 80 | Yes | 25 | 6 |
| 14 | 196 | 5 | 100 | 80 | Yes | 30 | 6 |
| 15 | 196 | 5 | 100 | 80 | Yes | 20 | 2 (duplicated vectors) |
| 16 | 196 | 5 | 100 | 80 | Yes | 20 | 6 (duplicated vectors) |

Fig. 9a

| Order | 5 | NA |
|---|---|---|
| Nc | 20, 25 & 30 | NA |
| Power(um) | 196 to 100 | Dynamic |
| BD(um) | 67 | Non-Dynamic |
| PD(um) | 80 to 64 | Dynamic |
| HD(um) | 100 to 80 | Dynamic |
| ET (us) | 80 | Non-Dynamic |
| Raster path | 6 Raster Strategies | NA |

Fig. 9b

| Failure order | Layer of failure | Max Power(W) | order | Min. Power (W) | Min. HD (um) | Dynamic PD | Nc | Raster path |
|---|---|---|---|---|---|---|---|---|
| 15 | 56 | 196 | 5 | 100 | 80 | Yes | 20 | 2 (duplicated vectors) |
| 16 | 56 | 196 | 5 | 100 | 80 | Yes | 20 | 6 (duplicated vectors) |
| 10 | 59 | 196 | 5 | 100 | 80 | Yes | 20 | 5 |
| 8 | 61 | 196 | 5 | 100 | 80 | Yes | 20 | 4 |
| 12 | 61 | 196 | 5 | 100 | 80 | Yes | 20 | 6 |
| 1 | 68 | 196 | 5 | 100 | 80 | Yes | 20 | 1 |
| 4 | 68 | 196 | 5 | 100 | 80 | Yes | 20 | 2 |
| 9 | 73 | 196 | 5 | 100 | 80 | Yes | 25 | 4 |
| 13 | 73 | 196 | 5 | 100 | 80 | Yes | 25 | 6 |
| 14 | 73 | 196 | 5 | 100 | 80 | Yes | 30 | 6 |
| 7 | 74 | 196 | 5 | 100 | 80 | Yes | 25 | 3 |
| 11 | 74 | 196 | 5 | 100 | 80 | Yes | 25 | 5 |
| 2 | 83 | 196 | 5 | 100 | 80 | Yes | 25 | 1 |
| 4 | 83 | 196 | 5 | 100 | 80 | Yes | 20 | 2 |
| 5 | 85 | 196 | 5 | 100 | 80 | Yes | 25 | 2 |
| 3 | 101 | 196 | 5 | 100 | 80 | Yes | 30 | 1 |

Fig. 10

| No | Max Power (W) | Order | Min Power (W) | Min HD | PD Dynamic | Nc | Angle (°) | Raster |
|----|---------------|-------|---------------|--------|------------|-----|-----------|--------|
| 1 | 196 | 3 | 100 | 80 | Yes | 40 | 39.8 | 1 |
| 2 | 196 | 5 | 100 | 80 | Yes | 40 | 39.8 | 1 |
| 3 | 196 | 3 | 100 | 80 | Yes | 45 | 44.9 | 1 |
| 4 | 196 | 5 | 100 | 80 | Yes | 45 | 44.9 | 1 |
| 5 | 196 | 3 | 100 | 80 | Yes | 49 | 49.6 | 1 |
| 6 | 196 | 5 | 100 | 80 | Yes | 49 | 49.6 | 1 |
| 7 | 196 | 10 | 100 | 80 | Yes | 49 | 49.6 | 1 |
| 8 | 196 | 3 | 100 | 80 | Yes | 53 | 55.2 | 1 |
| 9 | 196 | 5 | 100 | 80 | Yes | 53 | 55.2 | 1 |
| 10 | 196 | 10 | 100 | 80 | Yes | 53 | 55.2 | 1 |
| 11 | 196 | 3 | 100 | 80 | Yes | 56 | 59.9 | 1 |
| 12 | 196 | 5 | 100 | 80 | Yes | 56 | 59.9 | 1 |
| 13 | 196 | 3 | 100 | 80 | Yes | 40 | 39.8 | 2 |
| 14 | 196 | 5 | 100 | 80 | Yes | 40 | 39.8 | 2 |
| 15 | 196 | 3 | 100 | 80 | Yes | 45 | 44.9 | 2 |
| 16 | 196 | 5 | 100 | 80 | Yes | 45 | 44.9 | 2 |
| 17 | 196 | 3 | 100 | 80 | Yes | 53 | 55.2 | 2 |
| 18 | 196 | 5 | 100 | 80 | Yes | 53 | 55.2 | 2 |

Fig. 11a

| Order | 3, 5, 10 | - |
|---|---|---|
| Nc | 40, 45, 49, 53, 56 | - |
| Power(um) | 196 to 100 | Dynamic |
| BD(um) | 64 | Non-Dynamic |
| PD(um) | 80 to 64 | Dynamic |
| HD(um) | 100 to 80 | Dynamic |
| ET (us) | 80 | Non-Dynamic |
| Raster path | 1 &2 | - |

Fig. 11b

| Failure order | Layer of failure | Max Power(W) | order | Min. Power (W) | Min. HD (um) | Dynamic PD | Nc | angle | Raster path |
|---|---|---|---|---|---|---|---|---|---|
| 8 | 93 | 196 | 3 | 100 | 80 | Yes | 53 | 55.2 | 1 |
| 11 | 93 | 196 | 3 | 100 | 80 | Yes | 56 | 59.9 | 1 |
| 12 | 94 | 196 | 5 | 100 | 80 | Yes | 56 | 59.9 | 1 |
| 13 | 94 | 196 | 3 | 100 | 80 | Yes | 40 | 39.8 | 2 |
| 10 | 94 | 196 | 10 | 100 | 80 | Yes | 53 | 55.2 | 1 |
| 6 | 99 | 196 | 5 | 100 | 80 | Yes | 49 | 49.6 | 1 |
| 2 | 103 | 196 | 5 | 100 | 80 | Yes | 40 | 39.8 | 1 |
| 4 | 103 | 196 | 5 | 100 | 80 | Yes | 45 | 44.9 | 1 |
| 18 | Early removal | 196 | 5 | 100 | 80 | Yes | 53 | 55.2 | 2 |
| 3 | 109 | 196 | 3 | 100 | 80 | Yes | 45 | 44.9 | 1 |
| 5 | 109 | 196 | 3 | 100 | 80 | Yes | 49 | 49.6 | 1 |
| 9 | 109 | 196 | 5 | 100 | 80 | Yes | 53 | 55.2 | 1 |
| 1 | 111 | 196 | 3 | 100 | 80 | Yes | 40 | 39.8 | 1 |
| 7 | 116 | 196 | 10 | 100 | 80 | Yes | 49 | 49.6 | 1 |
| 14 | 290 | 196 | 5 | 100 | 80 | Yes | 40 | 39.8 | 2 |
| 15 | 290 | 196 | 3 | 100 | 80 | Yes | 45 | 44.9 | 2 |
| 16 | success | 196 | 5 | 100 | 80 | Yes | 45 | 44.9 | 2 |
| 17 | success | 196 | 3 | 100 | 80 | Yes | 53 | 55.2 | 2 |

Fig. 12

| No | Max Power (W) | Min Power (W) | Min ET | Min HD | PD min | Dynamic PD | Energy Density J/mm3 |
|---|---|---|---|---|---|---|---|
| 1 | 196 | 100 | 80 | 80 | 80 | No | 1.25 |
| 2 | 196 | 100 | 70 | 80 | 64 | Yes | 1.36 |
| 3 | 196 | 100 | 60 | 80 | 64 | Yes | 1.17 |
| 4 | 196 | 100 | 50 | 80 | 64 | Yes | 0.97 |
| 5 | 196 | 100 | 70 | 80 | 80 | No | 1.09 |
| 6 | 196 | 100 | 60 | 80 | 80 | No | 0.94 |
| 7 | 196 | 100 | 50 | 80 | 80 | No | 0.78 |
| 8 | 196 | 90 | 80 | 80 | 64 | Yes | 1.4 |
| 9 | 196 | 80 | 80 | 80 | 64 | Yes | 1.25 |
| 10 | 196 | 70 | 80 | 80 | 64 | Yes | 1.09 |
| 11 | 196 | 90 | 80 | 80 | 80 | No | 1.12 |
| 12 | 196 | 80 | 80 | 80 | 80 | No | 1 |
| 13 | 196 | 70 | 80 | 80 | 80 | No | 0.87 |
| 14 | 196 | 100 | 80 | 90 | 72 | Yes | 1.23 |
| 15 | 196 | 100 | 80 | 100 | 64 | Yes | 1.25 |
| 16 | 196 | 100 | 80 | 90 | 80 | No | 1.11 |
| 17 | 196 | 100 | 80 | 100 | 80 | No | 1 |
| 18 | 196 | 100 | 50 | 100 | 64 | Yes | 0.78 |

Fig. 13a

| Order | 5 | NA |
|---|---|---|
| Nc | 53 | NA |
| Power(um) | 196 to 100 | Dynamic |
| BD(um) | 67 | Non-Dynamic |
| PD(um) | 80 to (64,72,80) | Dynamic |
| HD(um) | 100 to (80, 90, 100) | Dynamic |
| ET (us) | 80 to (50,60,70) | Non-Dynamic & Step function |
| Raster path | 2nd raster | NA |

Fig. 13b

| No | Max Power (W) | Min Power (W) | Min ET | Min HD | PD min | Dynamic PD | Energy Density J/mm3 | Failed order | Layer thickness |
|---|---|---|---|---|---|---|---|---|---|
| 1 | 196 | 100 | 80 | 80 | 80 | No | 1.25 | Success | 349 |
| 2 | 196 | 100 | 70 | 80 | 64 | Yes | 1.36 | 2 | 118 |
| 3 | 196 | 100 | 60 | 80 | 64 | Yes | 1.17 | Success | 349 |
| 4 | 196 | 100 | 50 | 80 | 64 | Yes | 0.97 | Success | 349 |
| 5 | 196 | 100 | 70 | 80 | 80 | No | 1.09 | Success | 349 |
| 6 | 196 | 100 | 60 | 80 | 80 | No | 0.94 | Success | 349 |
| 7 | 196 | 100 | 50 | 80 | 80 | No | 0.78 | Success | 349 |
| 8 | 196 | 90 | 80 | 80 | 64 | Yes | 1.4 | 1 | 222 |
| 9 | 196 | 80 | 80 | 80 | 64 | Yes | 1.25 | 2 | 101 |
| 10 | 196 | 70 | 80 | 80 | 64 | Yes | 1.09 | Success | 349 |
| 11 | 196 | 90 | 80 | 80 | 80 | No | 1.12 | Success | 349 |
| 12 | 196 | 80 | 80 | 80 | 80 | No | 1 | Success | 349 |
| 13 | 196 | 70 | 80 | 80 | 80 | No | 0.87 | Success | 349 |
| 14 | 196 | 100 | 80 | 90 | 72 | Yes | 1.23 | Success | 349 |
| 15 | 196 | 100 | 80 | 100 | 64 | Yes | 1.25 | Success | 349 |
| 16 | 196 | 100 | 80 | 90 | 80 | No | 1.11 | Success | 349 |
| 17 | 196 | 100 | 80 | 100 | 80 | No | 1 | Success | 349 |
| 18 | 196 | 100 | 50 | 100 | 64 | Yes | 0.78 | Success | 349 |

Fig. 14

| Sample | Angle º | Thickness (mm) | Length (cm) |
|--------|---------|----------------|-------------|
| 1 | 20 | 2 | 0.5 |
| 2 | 20 | 2 | 2 |
| 3 | 20 | 2 | 3 |
| 4 | 20 | 0.5 | 1 |
| 5 | 20 | 1 | 1 |
| 6 | 20 | 3 | 1 |
| 7 | 20 | 5 | 1 |
| 8 | 15 | 2 | 1 |
| 9 | 25 | 2 | 1 |
| 10 | 30 | 2 | 1 |
| 11 | 30 | 2 | 1 |
| 12 | 35 | 2 | 1 |
| 13 | 40 | 2 | 1 |
| 14 | 40 | 2 | 1 |
| 15 | 20 | 2 (upper skin sample) | 1 |
| 16 | 20 | 2 | 1 |

Fig. 15

| Sample | Angle (º) | Thickness (mm) | Max. P (W) | Min. P (W) | Min. ET (us) | Min. HD (um) | Min. PD (um) | Nc | Min ED (J/mm²) |
|---|---|---|---|---|---|---|---|---|---|
| 1 | 20 | 2 | 196 | 100 | 80 | 100 | 80 | 53 | 1.0 |
| 2 | 20 | 2 | 196 | 100 | 80 | 100 | 80 | 53 | 1.0 |
| 3 | 20 | 2 | 196 | 100 | 80 | 100 | 80 | 53 | 1.0 |
| 4 | 20 | 0.5 | 196 | 100 | 80 | 100 | 80 | 14 | 1.0 |
| 4 | 20 | 0.5 | 170 | 100 | 50 | 100 | 80 | 19 | 0.63 |
| 5 | 20 | 1 | 196 | 100 | 80 | 100 | 80 | 27 | 1.0 |
| 6 | 20 | 3 | 196 | 100 | 80 | 100 | 80 | 53 | 1.0 |
| 7 | 20 | 5 | 196 | 100 | 80 | 100 | 80 | 53 | 1.0 |
| 8 | 15 | 2 | 196 | 100 | 80 | 100 | 80 | 56 | 0.63 |
| 8 | 15 | 2 | 196 | 100 | 50 | 100 | 80 | 56 | 0.63 |
| 9 | 25 | 2 | 196 | 100 | 80 | 100 | 80 | 49 | 1.0 |
| 10 | 30 | 2 | 196 | 100 | 80 | 100 | 80 | 45 | 1.0 |
| 11 | 30 | 2 | 196 | 100 | 80 | 100 | 80 | 34 | 1.0 |
| 12 | 35 | 2 | 196 | 100 | 80 | 100 | 80 | 40 | 1.0 |
| 13 | 40 | 2 | 196 | 100 | 80 | 100 | 80 | 33 | 1.0 |
| 14 | 40 | 2 | 196 | 100 | 80 | 100 | 80 | 15 | 1.0 |
| 15 | 20 | 2 (up-skin) | 196 | 100 | 80 | 100 | 80 | 53 | 1.0 |
| 16 | 20 | 2 | 196 | 100 | 50 | 100 | 80 | 53 | 0.63 |

Fig. 16

Nc: 33
Nc: 15

Lower value of Nc caused burning of powder at higher layers.

Sample 5 and 8 failed because of high bulk energy density

Fig. 17

Europäisches
Patentamt

European
Patent Office

Office européen
des brevets

# EUROPEAN SEARCH REPORT

Application Number

EP 20 30 6507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/311757 A1 (BUCKNELL JOHN RUSSELL [US] ET AL) 1 November 2018 (2018-11-01) * figures 6A-C,8A-C * * paragraphs [0055] - [0063] * * claims 1-3,17-19 * ----- | 1-15 | INV. B22F10/28 B22F10/36 B23K15/00 B23K26/342 B29C64/153 |
| X | US 2015/174658 A1 (LJUNGBLAD ULRIC [SE]) 25 June 2015 (2015-06-25) * figure 1 * * paragraphs [0079] - [0081] * * claims 1,2,5,14,15 * ----- | 1-4,6,7, 9,10,14, 15 | B29C64/393 B33Y10/00 B33Y50/02 |
| X | DE 10 2016 218951 A1 (FRAUNHOFER GES FORSCHUNG [DE] ET AL.) 5 April 2018 (2018-04-05) * paragraphs [0015], [0016], [0019] * * figures 1,2 * ----- | 1-4,6,7, 9,10,14, 15 | |
| X | WO 2019/091621 A1 (TRUMPF LASER & SYSTEMTECHNIK GMBH [DE]) 16 May 2019 (2019-05-16) * page 27, line 18 - page 28, line 22 * * claims 1-3 * * figures 5B,12 * ----- | 1,3,4,6, 9,10,14, 15 | TECHNICAL FIELDS SEARCHED (IPC) B22F B23K B29C |
| X | WO 2018/182596 A1 (HEWLETT PACKARD DEVELOPMENT CO [US]) 4 October 2018 (2018-10-04) * paragraphs [0023], [0030] * * claims 1,5-7,13 * * figures 1,2,8-13 * ----- | 1,3,4,6, 7,9,10, 14,15 | C22C B33Y |
| X | DE 10 2011 087374 A1 (FOCKELE MATTHIAS [DE]) 29 May 2013 (2013-05-29) * paragraphs [0032], [0033] * * figures 1-6 * ----- | 1,3,4,6, 9,10,14, 15 | |

The present search report has been drawn up for all claims

| Place of search | Date of completion of the search | Examiner |
|---|---|---|
| The Hague | 9 April 2021 | Knoflacher, Andreas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 30 6507

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2021

| Patent document cited in search report | Publication date | Patent family member(s) | | Publication date |
|---|---|---|---|---|
| US 2018311757 A1 | 01-11-2018 | CN | 108788143 A | 13-11-2018 |
| | | CN | 208758616 U | 19-04-2019 |
| | | EP | 3615310 A1 | 04-03-2020 |
| | | JP | 2020517500 A | 18-06-2020 |
| | | KR | 20190136090 A | 09-12-2019 |
| | | US | 2018311757 A1 | 01-11-2018 |
| | | WO | 2018200198 A1 | 01-11-2018 |
| US 2015174658 A1 | 25-06-2015 | CN | 105828985 A | 03-08-2016 |
| | | EP | 3083110 A1 | 26-10-2016 |
| | | US | 2015174658 A1 | 25-06-2015 |
| | | US | 2019375016 A1 | 12-12-2019 |
| | | WO | 2015091813 A1 | 25-06-2015 |
| DE 102016218951 A1 | 05-04-2018 | NONE | | |
| WO 2019091621 A1 | 16-05-2019 | CN | 111344094 A | 26-06-2020 |
| | | DE | 102017126624 A1 | 16-05-2019 |
| | | EP | 3710182 A1 | 23-09-2020 |
| | | US | 2020269352 A1 | 27-08-2020 |
| | | WO | 2019091621 A1 | 16-05-2019 |
| | | WO | 2020048646 A1 | 12-03-2020 |
| WO 2018182596 A1 | 04-10-2018 | CN | 110392628 A | 29-10-2019 |
| | | EP | 3600836 A1 | 05-02-2020 |
| | | US | 2021053278 A1 | 25-02-2021 |
| | | WO | 2018182596 A1 | 04-10-2018 |
| DE 102011087374 A1 | 29-05-2013 | DE | 102011087374 A1 | 29-05-2013 |
| | | EP | 2785481 A1 | 08-10-2014 |
| | | ES | 2773116 T3 | 09-07-2020 |
| | | US | 2014332507 A1 | 13-11-2014 |
| | | WO | 2013079581 A1 | 06-06-2013 |

EPO FORM P0459

For more details about this annex : see Official Journal of the European Patent Office, No. 12/82

**EP 4 008 456 A1**

**Patent documents cited in the description**

- WO 2017085469 A
- WO 2010007396 A
- WO 2014006094 A